# EUROPEAN PATENT SPECIFICATION

(11) **EP 0 927 689 B1**
(45) Date of publication and mention of the grant of the patent: **18.06.2003**
(21) Application number: 98850176.3
(22) Date of filing: 20.11.1998
(51) Int. Cl.: B65G 17/34, B65G 47/71

(54) **Method and equipment for the sorting of parcels**
Verfahren und Vorrichtung zum Sortieren von Paketen
Procédé et dispositif pour le tri de colis

(30) Priority: 29.12.1997 IT MI972884
(43) Date of publication of application: 07.07.1999
(73) Proprietor: SANDVIK AKTIEBOLAG, 811 81 Sandviken (SE)
(72) Inventor: Soldavini, Attilio, 21010 Ferno-Va (IT)
(74) Representative: Taquist, Lennart

(56) References cited:
- EP-A- 0 633 208
- EP-A- 0 774 429

## Description

The present invention proposes a method and an equipment for the automatic sorting of objects, which with respect to the existing machines permits substantially to double the productivity.

In particular, the method according to the invention is designed for the conveyance of objects in pairs on single sorting units of the sorting machine, formed by conveyor belts, by loading two different objects on each conveyor belt and sorting them in sequence at their respective destinations.

The sorting equipment according to the invention is formed by a series of trucks moving along a closed circuit along which containers are arranged which correspond to the different sorting destinations.

Each truck, according to a technic known as "cross belt" is fitted with a conveyor belt which can be activated to move perpendicularly to the running direction of the truck, so that the objects could be unloaded to the destinations placed at both sides of the sorting machine.

The invention makes possible, as it will be shown after in details, to double the production capacity of the sorting machines existing nowadays, combining the favourable characteristics of a sorting unit provided with belts, able to perform repeated controlled shiftings in the two senses, with the observation that, with two objects to be sorted it is always possible to establish the order in which arrange the same on the same sorting unit, so that they could be sorted to the destination with successive activations of the belt.

Before describing in details the invention, it is convenient to check the limits of productivity of the actual sorting machines and the reason why the search of new sorting machines capable of a higher productivity could be justified.

The sorting machines capable of the most higher productivities, are basically divided intro three types, depending on the solutions adopted for the unloading of the objects to the destination.

With tilt trays: the conveyor unit, usually a tray in a material with low friction mounted on a truck, is turned over in correspondence of the destination so that the object on board is accelerated laterally by the gravity force reaching then the destination.

With shoe sorters: the succession of conveyor units, dragged by chains forms a conveyor belt; each conveyor unit comprises a shoe sorter element which can be controlled to move through the conveyor platform in a direction orthogonal to the advancing direction of the machine, to push the object to the destination.

Usually these equipments are fitted with conveyor units very short so that it is possible to give to each object to be sorted a number of shoe sorters suitable to its lenght, a very useful solution to optimize the productivity when objects having different dimensions are to be sorted.

With cross belts: the sorting machine is formed by a series of trucks fitted with conveyor belts, the conveyor and sorting elements, oriented perpendicularly with respect to the direction of the sorting machine, which are actuated for the unloading in order to direct the object towards the collecting means at the sides of the route.

These latest equipments reached considerable levels of sophistication since the belt unloading has very precise contol functions. Sorting machines are known, in which each object is measured, in order to be loaded exactly in the middle of the cell, its correct positioning is checked, controlling, when necessary, the movement of the belt to correct the centring.

When unloading, the control actuates the belt with leads and acceleration ramps which are a function of the advancing speed, of the position on the cell, of the dimension, sometimes the kind, of the object, in order to assure the greatest unloading precision also with the most different objects.

These equipments are describes, for example, in the patents EP 0.481.341, EP 0.518.180 and EP 0.556.866, to which reference is made for more details.

All the equipments known have a limit of productivity, that is the number of objects the machine is capable of sorting in a time interval, determined essentially by the fact that the advancing speed of the machine must be lower, in the greatest part of the plants, than 2m/sec.

At this speed, a sorting machine comprising, for example a continuous succession of cells having a pitch of 500 mm, will drive before an utilizer 14400 cells per hour, then will sort as many objects per hour, provided that any cell is capable of receiving and sorting an object during any revolution of the machine.

For little objects to be sorted (dresses, books, envelopes, little parcels) the value above mentioned represents practically the actual technological limit.

More elevated speeds of the sorting machine would involve longer transients of acceleration during the loading with greater problems of precision due to the sliding and rolling effects of the objects.

Furthermore speeds near to 2 m/sec may cause effects that compromise the reliability of the treatment of light objects, due to the braking action of the air resistance, these effects getting rapidly worse with the increasing of the speed.

The productivity limits of the existing sorting technics are very often penalized with respect to the application requirements: in the different sectors the concentration of the distributive function in few centers requires, more often solutions for the automatic sorting of fluxes higher than those permitted by a sorting machine, towards an elevated number of destinations.

In order to satisfy these requirements numerous solutions have been realized using the available machines, but, with results not very satisfying because of the complexity and of the high prices.

In order to double the productivity a first solution consists in the use of two sorting machines moving along parallel routes and unloading the objects towards common exits. (It is the case, for example of two superposed sorting machines).

The solution is howerver very expensive because it requires two complete machines, more spaces, and also because the sorting towards common exits creates new complexities, for example the necessity of introducing conveyor belts and controls to the destination in order to drive in the same, with order and without crashes, the objects sorted in the same time by the two machines.

Therefore, this solution can result suitable only in the case of applications with high productivity and a low number of destinations.

Another technic, largely used when the applications involve a high number of destinations and a productivity higher than that of a single sorting machine, consists in the use of the so-called "presorting".

This technic involves the use of two machines in parallel and the division of the number of exits between these two machines. Substantially one of the machines will unload in the first half of the exits and the other in the second half.

In practice, it is necessary to divide the objects to be sorted towards two principal directions, each one having half of the final destinations of the sorting.

Since downstream the presorting station two sorting machines are used, each one with half of the total number of destinations, it will be possible to obtain the required productivity provided that the two fluxes of the pre-sorted objects are maintained constantly equal.

This condition is in reality very onerous and involves many complexities and costs both for dividing the entring objects, and for realizing suitable accumulations of objects presorted so that to reduce unbalancements between the two fluxes directed towards the sorting machines.

Even if it can be assumed that the destinations of the two groups are equiprobable, during the presorting on the short period the object are not divided exactely between the two directions, casually.

Without suitable dynamic accumurations these unbalancements would constantly produce loss of productivity because a machine, saturated, would slow the flux in entrance, while the other would have a not completely used production capacity.

Therefore it is possible to understand that the very expensive costs, the great complexity and also the exposure, heavy effects of casuality.

EP 0 633 208 A1 discloses an article sorting method in which a carriage provided with a plurality of conveyors on which articles can be placed by loading belt conveyors is movable along a track. The carriage moves the conveyor which then transfer the articles to appropriate distributing conveyors. In this method, articles are loaded onto and unloaded from the conveyors in a manner that does not account for the side of the track on which the articles will be unloaded.

Now the present innovation proposes a method and the relating equipment for the sorting of the parcels which permits a more simple solution to the problem to the elevated productivity.

The machine proposed is a sorting machine with orthogonal belts, with sorting units dimensioned in such a way that on board of each belt two objects can be loaded, instead of one, as in the existing sorting machines.

The objects are loaded on the belt by two successive activations, ordered when loaded so that it can be possible to sort them to their respective destinations by means of successive activations of the belt.

In order to do this, i.e. in order to be able to use the one and only possibility offered by the belt, as a sorting unit of multiple objects, it is sufficient, if we have two objects whose destinations are known, to establish the order of their loading on the belt that is, in such a way that the first to be sorted is by the side corresponding to its destination.

In this way each sorting unit will be able to sort two objects for each revolution of the sorting machine, so that the effective production will be equal to the double of the production expressed in cells per hour.

In reality an exactly double production will be obtained in the case of sorting machines with monolateral exits, that having exits placed only on one side of the sorting machine: in the case of machines with bilateral exits, the productivity will be a little smaller because some situations occur, in which the lower the frequence is the greater the number of destinations is, where only one of the objects loaded on the belt can be sorted because the other is directed to the opposite exit.

In the practical cases, the effects are negligible: it can be considered for example an application with 200 bilateral destinations, supposing that, because of the high speed of the machine, after the unloading of an object in a particular destination, it is not possible to unload the other object, which is on board of the same cell, in the opposite destination and in the following ones, the same opposed.

Supposing that, all the destinations equiprobable, given a pair of objects, the probability of having the previous condition and therefore that, only one can be sorted during the revolution of the machine, is equal to 3/200.

Therefore, considering the work of 10000 cells per hour, 150 cells (=10000 x 3/200) will sort only one of the two objects during every rotation of the machine, while the remaining 9850 will sort both the objects.

The total productivity will result equal to 19850 objects per hour, with a loss equal to 0.75%.

In practice, the loss will be more limited because not all of the destinations are equiprobable: it exist always a limited number of destinations, already known, collecting a great part of the flux; it will be sufficient therefore to distribute the important exits so that they result distant one to another in order to further reduce the probability that the condition above-mentioned occur.

The present invention will now be described in details, as a non limitative example, with reference to the enclosed figures.
- Figure 1 shows a sorting machine with cross belts: it comprises trucks that move on rails, which are connected one another by means of ties articulated in such a way to form a continuous train.
- Figure 2 shows a possible configuration of a loading station which is capable of loading pairs of objects on the same cell.
- Figures 3 to 3f show the time sequences of the two possible cases.
- Figures 4 to 4f show the successive time evolution: the two objects are sorted to the destinations during successive steps.
- Figure 5 shows in outline an equipment for the loading of objects in a sorting machine according to the invention.

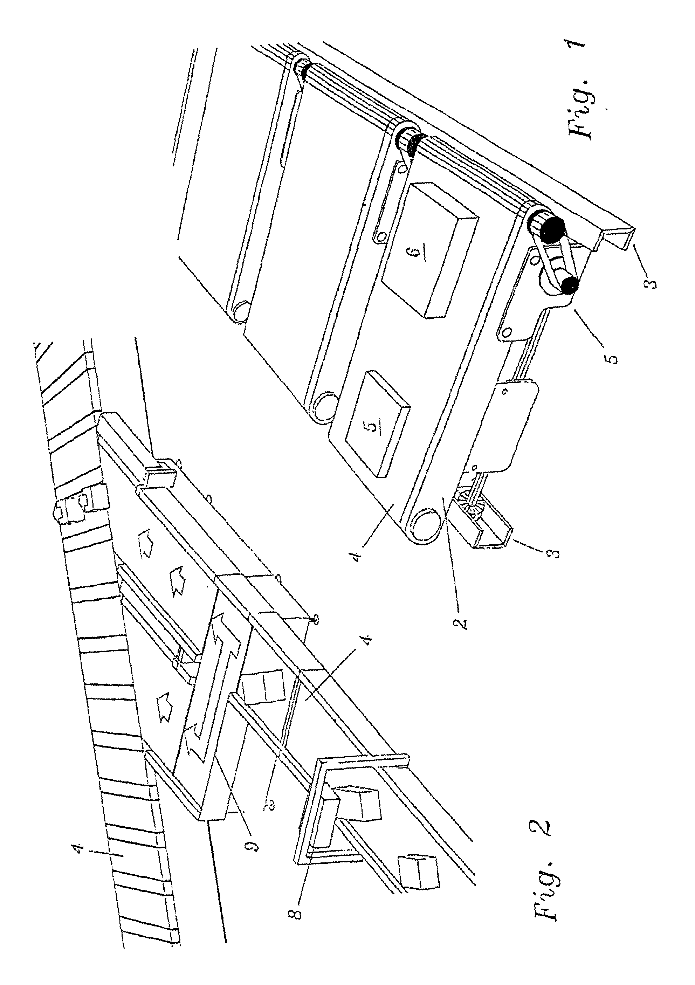

With reference to figure 1, a machine with a belt unit sufficient for loading two objects moves at a constant speed along a closed route, driven by electrical motors arranged on board.

For example, the machine comprises a plurality of belt units 1, each comprising a truck 2 which moves along tracks 3.

On each truck a belt 4 is mounted, which is driven by a servomotor 5, on which are loaded, in pairs, the objects 6 and 7 to be sorted.

The belts are preferably actuated by means of servoamplifiers with speed feedlock, so that the activation can be very independent of the weight of the objects conveyed.

The control permits constant and limited accelerations, so that the sliding phenomena of the objects on the belt result negligible.

Thanks to these characteristics the control technic permits to obtain with precision and with repeatability the multiple belt shiftings which are necessary for the treatment of two objects, as requested by the present invention.

In the same way, the consolidated unloading technics of an object on board of a belt sorting unit, permitting a precise control of the final position of the object on board, offer the possibility that after the first loading, a second object is transferred on board in the same way, by means of a second loading unit.

The loading technics involve the use of belts, oriented at 45° with respect to the sorting machine, which are able to accelerate the object so that to obtain a synchronized loading on the belt cell, said loading being activated at the moment of the arrival of the object in such a way that the transfer of the object occurs without slidings.

As shown in figure 2, in a loading station which is capable to load pairs of objects on the same cell, the objects, provided with bar code, are identified by a reading station (8).

After having defined the destination of the pairs of objects, there last are part in these requested loading order, by shifting one or the other object on the upstream loading line, by means of a conveyor belt (9) which is capable of orthogonal mouvements.

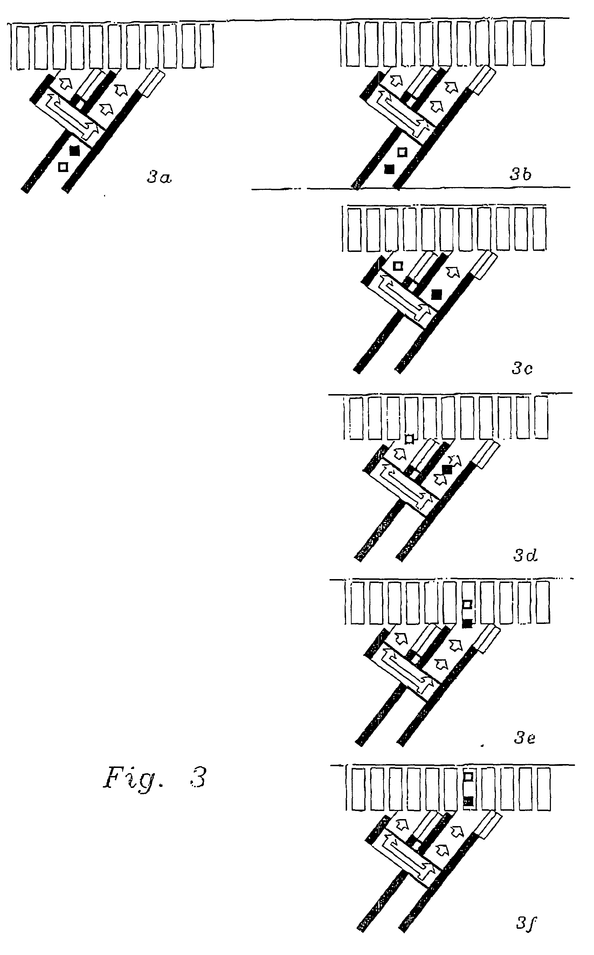

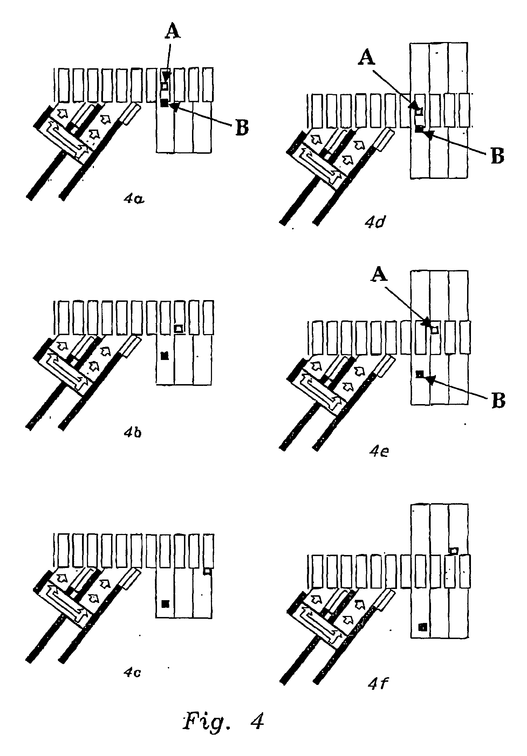

Figure 3 shows the time sequences of the two possible cases, while figure 4 shows the following time evolution: the two objects are sorted to the destinations during successive steps.

Figures 3A to 3f show the example in which a parcel A must be loaded on the cell before a parcel B.

In case the parcel B arrives at the loading station before the parce A (Figure 3a) the parcel B is advanced and successively the parcel A is deviated on the loading line sideways.

In case the parcel B arrives at the loading station after the parcel A (Figure 3b) the parcel A is deviated on the loading line sideways and successively the parcel B moves forward.

In both cases the situation schematized in figure 3 c, is reached, in which the parcel A is on the belt downstream and the parcel B on the one upstream.

After the loading action, the two parcels are arranged on the cell as schematized in figure 3 f.

When unloading two possible cases could becom: both parcels are unloaded at the same side of the machine or both parcels are unloaded at opposite sides.

In the first case if the parcel B is to be unloaded before the parcel A, the belt of the cell is activated to make the parcel B exit (Figure 4a) and the parcel A shifts, remaining however on the cell after that the parcel B has been unloaded (Figure 4b).

Even the parcel A, when it arrives near the corresponding exit, is unloaded by activating the belt of the cell in the same direction (Figure 4 c).

On the contrary, in case two parcels must be unloaded on opposite parts, the first to be activated is the belt in the unloading direction of the first of the two parcels (for example unloading of the parcel B in figure 4d), with the parcel A that shifts, remaining however on the cell.

The belt is activated in order to bring the parcel A back to the original position, successive to the loading, (Figure 4e) and thereafter, near the corresponding exit, also the parcel A is unloaded by activating the belt of the cell in the direction opposite to the previous one (Figure 4f).

The lateral deviation, which is necessary for automatically arranging the objects in the requested order, obtained by means of the conveyor (9) of figure 2, can be performed by means of orthogonal tables, that is with machines (which are known) capable of mouvements in the two orthoganal directions, comprising motorized rollers alterned with narrow conveyor belts which are raised beyond the rollers when the conveyance direction of the object is to be changed.

For the deviation it is possible to use also, in the applications with regular objects which can be easily treated, simple deviators in a fixed position after the reading station of the bar code.

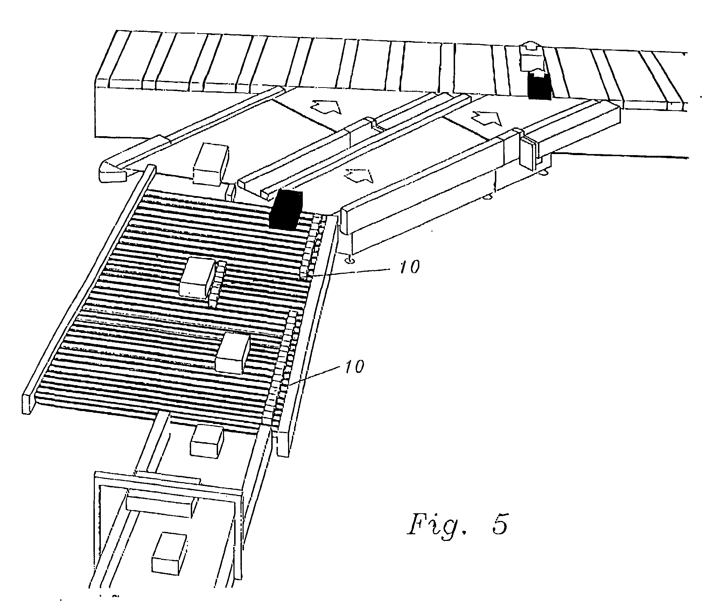

In the more complicated cases, with objects which are more difficult to treat, it is possible to use machines deriving from sorting machines with pushing means, as shown in figure 5, in which one sorter element 10 pushes the cbjects towards one side or the other of a roller conveyor, in order to address the same towards separated conveyors which load them on the machine.

It is also possible to use manual solutions for the loading; in this case the operators will load pairs of objects on the loading belts, or directly on the cells, after having read the bar code of the objects with a laser gun and consequently having received from the computer the information concerning the order of the two objects.

In order to load pairs of ordered objects it is possible to take advantage of the possibility given by the multiple loading stations; in this case the stations could be the conventional belt stations, oriented at 45° with respect to the machine, arranged in sequence.

In this case, supposing that a station loads an object on one cell, there is a great probability that there is at least an object, available on the lines downstream of the previous one, which has a suitable destination to be loaded on the same cell.

This method is a probabilistic one, and therefore adequated safety margins must be considered on the value of the practical productivity, unlike the method before described, where the automatic order of each pair of objects is deterministic and therefore assures the double productivity.

Inspite of this, the probabilistic method could result economically interesting in particular applications, since it would permit an average productivity higher than 60% at least, with respect to the productivity of the machine, with cheap loading solutions.

The solution described for the treatment of pairs of objects on the same sorting unit, in order to double the productivity of the sorting machine, can be generalized to the cases of three or more objects on the same unit, in order to obtain higher capacities.

In these cases it is possible to foresee also a vertical arrangement of the objects, stacking upon the sorting cell in a different order with respect to the unloading priority.

For example, for applications with thin objects, i.e. books, envelopes, clothes, it is possible to consider that, the sorting belt unit, is fitted on its upper side with a suitable vertical loader, which is capable to load a number of objects in as many separated positions.

At each activation of the sorting belt, the loader would provide with the vertical conveyance of the end of the objects, making them shift down of a position and therefore feeding in sequence the belt of the cell which will sort all the objects.

A skilled man will be able then to foresee various changes and variations in order to obtain solutions with an elevated productivity, or to obtain the productivity requested by the sorting machine with a very low advancing speed.

The changes and variations will have to be however included in the field of the present invention as defined by the appended claims.

## Claims

1. Method for the sorting of objects (6, 7) by means of an equipment for sorting objects, the equipment comprising a plurality of conveyor platforms (1), the conveyor platforms (1) being movable along a route between a loading zone (L) in which the objects are introduced onto the platforms (1) and an unloading zone in which the objects are unloaded from the platforms (1) into one or more collecting devices disposed sideways relative to the route, each conveyor platform (1) defining two zones, each of the two zones being designed to receive an object, **characterized in that** the equipment includes means (9) for modifying a loading order of the objects in the equipment so that the first object to be unloaded is placed, after loading, in the zone of the conveyor platform (1) which is on the side where is the first collecting device and **in that** the method includes the steps of
- ordering the objects to be sorted so as to load the objects in the equipment in accordance with an unloading order; if necessary, modifying a loading order of the objects in the equipment so that the first object to be unloaded is placed, after loading, in the zone of the conveyor platform (1) which, is on the side where is the first collecting device
- loading the objects onto the conveyor platform;
- unloading the objects from the conveyor platform, according to the desired unloading order, when the conveyor platform (1) is disposed proximate the unloading zone for receiving the objects.

2. Method for sorting according to claim 1, **characterized in that** the method includes:
- determining, at the time of loading the objects, an order in which they must be
- unloaded; and
- loading the objects so that, after loading, a first one of the objects to be unloaded is in a zone of the conveyor platform (1) disposed on a side of the conveyor platform (1) on which there is a first collecting device.

3. Method for sorting according to claim 2, **characterized in that** the ojects are ordered and are introduced into the equipment so that the objects are arranged corresponding to an unloading order.

4. Equipment for sorting objects, comprising a plurality of conveyor platforms, the conveyor platforms (1) being movable along a route between a loading zone (L) in which the objects are introduced onto the platforms (1) and an unloading zone in which the objects are unloaded from the platforms (1) into one or more collading devices disposed sideways relative to the route, each conveyor platform (1) defining two zones, each zone of the two zones being designed to receive an object, **characterized in that** the equipment includes means for modifying a loading order of the objects in the equipment so that the first object to be unloaded is placed, after loading, in a zone of the conveyor platform (1) which is on the unloading side where there is a first collecting device for receiving the objects.

5. Equipment according to claim 5, comprising loading belts (9u, 9d) for introducing objects onto the conveyor platforms (1) when the conveyor platforms (1) are disposed proximate the loading zone (L), **characterized in that** at least a segment of the belts is split into branches (9u, 9d) and, upstream of the split segment, the equipment includes an exchanger device (10) for directing objects toward a desired one of the branches.

6. Equipment according to claim 6, **characterized in that** the exchanger device includes an orthogonal table.

7. Equipment according to claim 5 or 6, **characterized in that**, proximate the loading zone (L), belts are provided, the belts being adapted to be raised and lowered to align the belts with a loading belt (9u, 9b) of the equipment and the conveyor platforms (1).

## Patentansprüche

1. Verfahren zum Sortieren von Objekten (6.7) mit Mitteln einer Ausrüstung für das Sortieren von Objekten, wobei die Ausrüstung eine Mehrzahl von Fördermittelplattformen (1) aufweist, wobei die Fördennittelplattformen (1) beweglich entlang einer Route zwischen einer Ladezone (L), in welcher die Objekte auf die Plattform (1) aufgebracht werden, und einer Entladezone, in welcher die Objekte von den Plattformen (1) abgeladen werden in eine oder mehrere Sammelvorrichtungen, die seitlich relativ zu der Route angeordnet sind, wobei jede Fördermittelplattform (1) zwei Zonen definiert, wobei jede der beiden Zonen so gestaltet ist, daß sie ein Objekt aufnimmt, **dadurch gekennzeichnet, daß** die Ausrüstung Mittel (9) aufweist zur Modifizierung einer Beladungsreihenfolge von Objekten in der Ausrüstung, so daß das erste zu entiadende Objekt nach dem Laden in der Zone der Fördermittelplattform (1) angeordnet ist, welche sich auf der Seite der erster Sammeleinrichtung befindet, und **dadurch gekennzeichnet, daß** das Verfahren die Schritte einschließt:
- Ordnen der zu sortierenden Objekte, so daß die Objekte In Übereinstimmung mit einer Entladeordnung in die Ausrüstung geladen werden; falls notwendig. Modifizieren einer Ladeordnung der Objekte in der Ausrüstung, so daß das erste zu entladende Objekt nach dem Laden in der Zone der Fördermittelplattform (1) angeordnet ist, welche sich auf der Seite der ersten Sammeleinrichtung befindet;
- Laden der Objekte auf die Fördermittelplattform;
- Entladen der Objekte von der Fördermittelplattform gemäß der gewünschten Entladereihenfolge, wenn die Fördermittelplattform (1) der Entladezone zur Aufnahme der Objekte benachbart angeordnet ist.

2. Verfahren zum Sortieren nach Anspruch 1, **dadurch gekennzeichnet, daß** das Verfahren einschließt :
- Bestimmen einer Reihenfolge zum Zeitpunkt des Ladens der Objekte, in welcher die Objekte entladen werden müssen; und
- Laden der Objekte, so daß nach dem Laden eines der zu entladenden Objekte in einer Zone der Fördermittelplattform (1) angeordnet ist, die auf einer Seite der Fördermittelplattfonn (1) angeordnet ist, auf welcher eine erste Sammeleinrichtung ist.

3. Verfahren zum Sortieren nach Anspruch 2, **dadurch gekennzeichnet, daß** die Objekte geordnet und in die Ausrüstung eingebracht werden, so daß die Objekte entsprechend einer Entladereihenfolge angeordnet werden.

4. Ausrüstung zum Sortieren von Objekten einschließlich einer Mehrzahl von Fördermittelplattformen, wobei die Fördermittelplattformen (1) entlang einer Route zwischen einer Ladezone (L), in welcher die Objekte auf die Plattform (1) aufgebracht werden, und einer Entladezone, in welcher die Objekte von den Plattformen (1) in eine oder mehrere Sammeleinrichtungen, die seitlich relativ zu der Route angeordnet sind, entladen werden, beweglich sind, wobei jede Fördermittelplattform (1) zwei Zonen definiert, wobei jede der beiden Zonen so gestaltet ist, um ein Objekt zu empfangen, **dadurch gekennzeichnet, daß** die Ausrüstung Mittel zur Modifizierung einer Ladereihenfolge der Objekte in der Ausrüstung einschließt, so daß das erste zu entladende Objekt nach dem Laden in einer Zone der Fördermittelplattform (1) angeordnet ist, welche sich auf der Entladeseite, auf der eine erste Sammeleinrichtung zum Empfang der Objekte ist, befindet.

5. Ausrüstung nach Anspruch 4, mit Ladebändem (9u, 9d) zum Einfügen von Objekten auf die Fördermittelplattformen (1), wenn die Fördermittelplattformen (1) der Ladezone (L) benachbart angeordnet sind, **dadurch gekennzeichnet, daß** mindestens ein Segment der Bänder in zwei Zweige (9u, 9d) aufgeteilt ist und stromaufwärts von dem aufgeteilten Segment die Ausrüstung eine Austauschvorrichtung (10) umfaßt, um die Objekte zu einem gewünschten Zweig hinzuleiten.

6. Ausrüstung nach Anspruch 5, **dadurch gekennzeichnet, daß** die Austauschvorrichtung einen orthogonalen Tisch aufweist.

7. Ausrüstung nach Anspruch 4 oder 5, **dadurch gekennzeichnet, daß** benachbart zu der Ladezone (L) Bänder bereitgestellt werden, die angepaßt werden, um erhöht oder erniedrigt zu werden, um die Bänder mit einem Ladeband (9u, 9b) der Ausrüstung und der Fördermittelplattformen (1) auszurichten.

## Revendications

1. Procédé de tri d'objets (6, 7) au moyen d'un équipement destiné à trier les objets, l'équipement comprenant un certain nombre de plates-formes de transporteur (1), les plates-formes de transporteur (1) étant mobiles le long d'un parcours entre une zone de chargement (L) dans laquelle les objets sont introduits sur les plates-formes (1) et une zone de déchargement dans laquelle les objets sont déchargés depuis les plates-formes (1) dans un ou plusieurs dispositifs de recueil disposés latéralement par rapport au parcours, chaque plate-forme de transporteur (1) définissant deux zones, chacune des deux zones étant conçue pour recevoir un objet, **caractérisé en ce que** l'équipement comprend un moyen (9) destiné à modifier un ordre de chargement des objets dans l'équipement de sorte que le premier objet devant être déchargé est placé après chargement dans la zone de la plate-forme de transporteur (1) qui est du côté où se trouve le premier dispositif de recueil et **en ce que** le procédé comprend les étapes consistant à :
- ordonner les objets devant être triés de façon à charger les objets dans l'équipement conformément à un ordre de déchargement,
- si nécessaire, modifier l'ordre de chargement des objets dans l'équipement de sorte que le premier objet devant être déchargé soit placé, après chargement, dans la zone de la plate-forme de transporteur (1) qui est du côté où se trouve le premier dispositif de recueil,
- charger les objets sur la plate-forme de transporteur,
- décharger les objets de la plate-forme de transporteur, conformément à l'ordre de déchargement désiré, lorsque la plate-forme de transporteur (1) est disposée à proximité de la zone de déchargement destinée à recevoir les objets.

2. Procédé de tri selon la revendication 1, **caractérisé en ce que** le procédé comprend :
- la détermination, au moment du chargement des objets, d'un ordre suivant lequel ils doivent être déchargés, et
- le chargement des objets, de sorte que, après le chargement, un premier objet parmi les objets devant être déchargés se trouve dans une zone de la plate-forme de transporteur (1) disposée du côté de la plate-forme de transporteur (1) sur lequel se trouve un premier dispositif de recueil.

3. Procédé de tri selon la revendication 2, **caractérisé en ce que** les objets sont ordonnés et sont introduits dans l'équipement de sorte que les objets sont agencés de façon correspondante à un ordre de déchargement.

4. Equipement destiné à trier les objets, comprenant un certain nombre de plates-formes de transporteur, les plates-formes de transporteur (1) étant mobiles suivant un parcours entre une zone de chargement (L) dans laquelle les objets sont introduits sur les plates-formes (1) et une zone de déchargement dans laquelle les objets sont déchargés des plates-formes (1) dans un ou plusieurs dispositifs de recueil disposés latéralement par rapport au parcours, chaque plate-forme de transporteur (1) définissant deux zones, chaque zone dès deux zones étant conçue pour recevoir un objet, **caractérisé en ce que** l'équipement comprend un moyen destiné à modifier l'ordre de chargement des objets dans l'équipement de sorte le premier objet devant être déchargé soit placé, après chargement, dans une zone de la plate-forme de transporteur (1) qui est du côté de déchargement où se trouve un premier dispositif de recueil destiné à recevoir les objets.

5. Equipement selon la revendication 5, comprenant des courroies de chargement (9u, 9d) destinées à introduire des objets sur les plates-formes de transporteur (1) lorsque les plates-formes de transporteur (1) sont disposées à proximité de la zone de chargement (L), **caractérisé en ce qu'**au moins un segment des courroies est séparé en branches (9u, 9d) et, en amont du segment séparé, l'équipement comprend un dispositif échangeur (10) destiné à diriger les objets vers uns branche désirée parmi les branches.

6. Equipement selon la revendication 6, **caractérisé en ce que** le dispositif échangeur comprend une table orthogonale.

7. Equipement selon la revendication 5 ou 6, **caractérisé en ce que**, à proximité de la zone de chargement (L), des courroies sont prévues, les courroies étant adaptées pour s'élever et s'abaisser afin d'aligner les courroies avec une courroie de chargement (9u, 9b) de l'équipement et les plates-formes de transporteur (1).
